# EUROPEAN PATENT APPLICATION

(11) **EP 1 075 989 A2**
(43) Date of publication of application: **14.02.2001**
(21) Application number: 00114766.9
(22) Date of filing: 10.07.2000
(51) Int. Cl.: B60R 25/00

(54) **Improved vehicle antitheft device**

(30) Priority: 09.08.1999 IT MI991800
(71) Applicant: Tecnoblock S.r.l., 29100 Piacenza (IT)
(72) Inventor: Campioli, Daniele, 42010 Scandiano (Reggio Emilia) (IT)
(74) Representative: Kratter, Carlo, Dr. Ing.

(57) **Abstract**

This antitheft device can be used on a vehicle having a line (1) through which a fluid passes and which when closed by a shut-off member prevents the fluid flowing and hence prevents theft of the vehicle, said line (1) being part of a hydraulic and/or hydropneumatic circuit, said member (2) being controlled by a control circuit (4) which controls the actuator means (13). The control circuit (4) is directly fixed to the shut-off member (2). This latter is preferably and advantageously a bistable valve.

## Description

This invention relates to a vehicle antitheft device in accordance with the introduction to the main claim.

Motor vehicle antitheft devices are known based on shutting off a circuit essential for the vehicle operation. In these circuits, for example the braking, clutch or fuel circuit, shut-off is achieved by solenoid valves, which can be of normally closed or normally open type. These valves can also advantageously be bistable solenoid valves of the the type forming a parallel patent application filed in the name of the current applicant.

Such solenoid valves are usually controlled by control circuits themselves controlled by actuator means which may be a usual remote control, an encoded transponder, a mechanical key, an electronic key or the like. These control circuits are generally positioned a certain distance from the shut-off member, making the time required for installing the antitheft device significant. This reflects on the installation cost.

Moreover, separating the shut-off member from the control circuit means that electrical cables and connections are required for the control member, such cables and connections being a possible source of malfunction of the antitheft device and an invitation to it's tampering.

An object of the invention is to provide an antitheft device which represents a an improvement over known devices and which, in particular, solves the aforesaid problems of known devices in which the control circuit and the shut-off member are separated.

This and further objects which will be apparent from the ensuing description are attained by a motor vehicle antitheft device in accordance with the accompanying claims.

The invention will be better understood from the detailed description given hereinafter by way of example with reference to the accompanying drawing, on which:
Figure 1 shows by way of an example a schematic representation of the device; and
Figure 2 is a schematic representation of one embodiment of a part of the device of the invention.

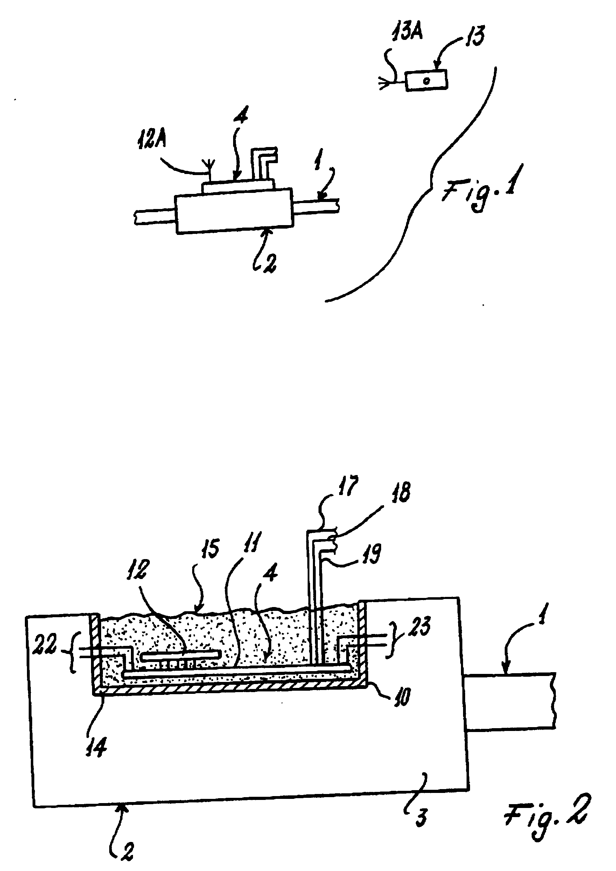

With reference to said figures, a shut-off member is connected into a line 1 through which fluid of a conventional hydraulic and/or hydropneumatic operational circuit of a motor vehicle flows. This member is preferably a bistable valve 2. The circuit can be the braking, the clutch or the fuel circuit.

When in one state, the bistable valve 2 shuts off the line 1, whereas when in its other state it opens it. Passage from one state to the other is achieved by an electrical pulse generated by a control circuit 4, preferably a microprocessor. According to the invention, this latter is fixed to the solenoid valve 2 and is preferably incorporated into the body 3 thereof. By means of said pulses, the valve passes from one state (for example shut-off) to the other (for example open) and vice versa, and remains in one or the other of these states mechanically, awaiting the next pulse.

The pulses can be generated by usual pulse generators (not shown), connected to a power source also not shown, for example the vehicle battery.

The control circuit 4 is inserted into a seat 10 in the body 3 of the valve 2. This circuit comprises a usual part 11 on which the contacts are arranged (printed circuit) and a module 12 for radio communication with an actuator member 13, for example a transponder, both provided with antennas 12A and 13A. The seat 10 is insulated electrically by a insulating member 14. Finally, the circuit 4 is covered with a further insulating element 15, for example resin, which incorporates it and fixes it to the valve body 3.

The circuit 4 is connected by a first electric cable 17 to the power supply (vehicle battery), by a second cable 18 advantageously to a usual vehicle starting member (not shown) which is inhibited on activating the antitheft device, and by a third cable 19 to the usual key ignition block of the vehicle engine, so as to sense the position of this key (for starting or stopping the vehicle).

The circuit 4 is also connected by electrical connectors 22 and 23 to the usual electrical members of the bistable solenoid valve 2 to enable it to operate. The circuit can also be connected to acoustic or visual warning devices (not shown) indicating an alarm or the activation of the circuit 4, by additional electric cables emerging from the insulated part.

The antitheft device constructed in this manner is compact and can be easily and quickly mounted on the vehicle. The device advantageously switches on automatically after a predetermined time and can be deactivated only by the actuator member 13 (transponder, remote control, mechanical or electronic key, etc.). In any event, if the vehicle is not started within a predetermined time from deactivation of the device, this again switches itself on.

It should be noted that the transponder memorizes the state of the alarm, the date and time of starting, and the series number of the transponder. Other information can also be memorized in it.

The device has been described as using a bistable solenoid valve forming the subject of a parallel patent application. This solenoid valve can however be of different type known in the state of the art.

## Claims

1. An immobilizing motor vehicle antitheft device provided with hydraulic and/or hydropneumatic operating circuits, there being provided in a line (1) of one of these circuits a shut-off valve member (2) controlled by control means (4) arranged to switch said member (2) into two different working positions, in a first of which it shuts off the line (1) and in the second of which it opens it, characterised in that the control means (4) are fixed to the shut-off member (2).

2. A device as claimed in claim 1, characterised in that the control means (4) are inserted into the body (3) of the shut-off member (2).

3. A device as claimed in claim 2, characterised in that the control means comprise a microprocessor circuit (4) inserted into a seat (10) provided in the body (3) of the shut-off member (2), said circuit being separated from said body (3) by insulating means (14, 15), said seat (10) being filled with one of said means, which also act as means for fixing the circuit (4) to the shut-off member.

4. A device as claimed in claim 3, characterised in that the insulating means (15) also acting as fixing means are a layer of resin.

5. A device as claimed in claim 1, characterised in that the electrical connections between the control means (4) and the shut-off member lie within the interior of the structure formed by this latter and said means.

6. A device as claimed in claim 5, characterised in that electrical connections (17, 18, 19) for powering the control means (4) and for connecting them to the usual vehicle engine starting member and to the usual vehicle ignition block emerge from the structure formed by the shut-off member and the control means (4).

7. A device as claimed in claim 1, characterised in that the control means (4) are of the type which automatically become activated after a predetermined time period following vehicle stoppage, and also after a predetermined time period following their deactivation should the vehicle engine not by then have been started.

8. A device as claimed in claim 1, characterised in that the shut-off member is a bistable valve.
